(19)

Europäisches
Patentamt

European
Patent Office

Office européen
des brevets

(11) **EP 4 456 627 A1**

(12) **EUROPEAN PATENT APPLICATION**
published in accordance with Art. 153(4) EPC

(43) Date of publication:
**30.10.2024 Bulletin 2024/44**

(21) Application number: **21968702.7**

(22) Date of filing: **24.12.2021**

(51) International Patent Classification (IPC):
***H04W 68/02*** (2009.01)

(52) Cooperative Patent Classification (CPC):
**Y02D 30/70**

(86) International application number:
**PCT/CN2021/141349**

(87) International publication number:
**WO 2023/115573 (29.06.2023 Gazette 2023/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **LI, Yanhua**
**Beijing 100085 (CN)**

(74) Representative: **Dehns Germany Partnerschaft
mbB**
**Theresienstraße 6-8**
**80333 München (DE)**

(54) **INFORMATION PROCESSING METHOD AND APPARATUS, COMMUNICATION DEVICE, AND
STORAGE MEDIUM**

(57)     Embodiments of the present disclosure provide an information processing method and apparatus, a communication device, and a storage medium. The information processing method is executed by a base station, and comprises: transmitting the historical camping information of an inactive user equipment (UE) to a core network device (S 110).

```
┌──────────────┐                                    ┌──────────────┐
│ base station │                                    │ core network │
│              │                                    │   device     │
└──────────────┘                                    └──────────────┘
       │                                                    │
       │        S110: transmitting historical               │
       │         camping information of an                   │
       │──────── inactive user equipment to a ─────────────▶│
       │             core network device                    │
       │                                                    │
       │                                                    │
```

FIG. 2

# Description

## TECHNICAL FIELD

The present disclosure relates to, but is not limited to, the field of wireless communication technology, and in particularly, to a method and an apparatus for processing information, a communication device, and a storage medium.

## BACKGROUND

A mechanism of paging packet is currently in discussion in radio access network (RAN), which is introduced mainly for reducing a false alarm.

A typical case is that all user equipment in one paging occasion (PO) would be alarmed if no paging packet is performed.

In one case, the UEs within the PO have different paging probabilities, then a user equipment with a low paging probability is alarmed incorrectly, resulting in the false alarm and causing excess power consumption.

Hence the paging packet is being considered. At present, carrying of paging packet information is discussed in radio access network 1 (RANI), which can be placed in downlink control information (DCI), or in paging early indication (PEI).

Regardless of packet solutions employed, both a terminal and a network (a base station, a core network) require agreement on a packet in which the terminal is located in order to properly transmit paging messages to the user equipment.

## SUMMARY

Embodiments of the present disclosure provides a method and an apparatus for processing information, a communication device, and a storage medium.

According to a first aspect of embodiments of the present disclosure, a method for processing information is provided. The method is performed by a base station, and includes:
transmitting historical camping information of an inactive user equipment (UE) to a core network device.

Based on the above solution, the historical camping information includes:

historical camping cell information;
and/or,
historical camping base station information.

Based on the above solution, the historical camping cell information at least indicates last one or more cells in which the inactive user equipment camps.

Based on the above solution, the historical camping base station information at least indicates last one or more base stations in which the inactive user equipment camps.

Based on the above solution, transmitting the historical camping information of the inactive UE to the core network device includes:
transmitting a radio resource control (RRC) inactive transition report comprising the historical camping information to the core network device.

Based on the above solution, the radio resource control inactive transition report comprises a state value;

transmitting the RRC inactive transition report including the historical camping information to the core network device including:
transmitting the RRC inactive transition report including the historical camping information to the core network device in response to the state value indicating that the UE is in an inactive state.

Based on the above solution, the method further includes:
receiving a request for the RRC inactive transition report from the core network device.

Based on the above solution, the request further includes:

a single state reporting request;
or,
a subsequent state reporting request.

Based on the above solution, the request is the single state reporting request, the historical camping information is included in a RRC inactive transition report responsive to the single state reporting request;
or,
the request is the subsequent state reporting request, the historical camping information is included in a first RRC inactive transition report responsive to the subsequent state reporting request.

Based on the above solution, transmitting the historical camping information of the inactive UE to the core network device includes:
transmitting the historical camping information of the inactive UE to the core network device in response to a conversion of a non-anchor base station to an anchor base station of the inactive UE.

According to a second aspect of embodiments of the present disclosure, a method for processing information is provided. The method is performed by a core network device, and includes:
receiving historical camping information of an inactive user equipment (UE) transmitted by a base station.

Based on the above solution, the historical camping information includes:

historical camping cell information;
and/or,
historical camping base station information.

Based on the above solution, the historical camping cell information at least indicates last one or more cells in which the inactive user equipment camps.

Based on the above solution, the historical camping base station information at least indicates last one or more base stations in which the inactive user equipment camps.

Based on the above solution, receiving the historical camping information of the inactive UE transmitted by the base station, includes:

receiving a radio resource control (RRC) inactive transition report comprising the historical camping information transmitted by the base station.

Based on the above solution, the RRC inactive transition report includes a state value;

a RRC inactive transition report of the historical camping information with the state value indicating that the UE is in an inactive state includes the historical camping information of the inactive UE.

Based on the above solution, the method further includes:

transmitting a request for the RRC inactive transition report to the base station.

Based on the above solution, the request includes:

a single state reporting request;
or
a subsequent state reporting request.

Based on the above solution, receiving the historical camping information of the inactive UE transmitted by the base station includes:

receiving the historical camping information transmitted by an anchor base station after the inactive UE performs cell reselection.

According to a third aspect of embodiments of the present disclosure, an apparatus for processing information is provided. The apparatus includes:

a first transmitting module, configured to transmit historical camping information of an inactive user equipment (UE) to a core network device.

Based on the above solution, the historical camping information includes:

historical camping cell information;
and/or,
historical camping base station information.

Based on the above solution, the historical camping cell information at least indicates last one or more cells in which the inactive UE camps.

Based on the above solution, the historical camping base station information at least indicates: last one or more base stations in which the inactive UE camps.

Based on the above solution, the first transmitting module is configured to transmit a radio resource control (RRC) inactive transition report including the historical camping information to the core network device.

Based on the above solution, the RRC inactive transition report includes a state value;

the first transmitting module is configured to transmit the radio resource control inactive transition report including the historical camping information to the core network device in response to the state value indicating that the UE is in an inactive state.

Based on the above solution, the apparatus further includes:

a first receiving module, configured to receive a request for the RRC inactive transition report from the core network device.

Based on the above solution, the request includes:

a single state reporting request;
or,
a subsequent state reporting request.

Based on the above embodiment, the request is the single state reporting request, the historical camping information is included in a RRC inactive transition report responsive to the single state reporting request;
or,
the request is the subsequent state reporting request, the historical camping information is included in a first RRC inactive transition report responsive to the subsequent state reporting request.

Based on the above solution, the transmitting module is configured to transmit the historical camping information of the inactive UE to the core network device in response to a conversion of a non-anchor base station to an anchor base station of the inactive UE.

According to a fourth aspect of embodiments of the present disclosure, an apparatus for processing information is provided. The apparatus includes:

a second receiving module, configured to receive historical camping information of an inactive user equipment (UE) transmitted by a base station.

Based on the above solution, the historical camping information includes:

historical camping cell information;
and/or,
historical camping base station information.

Based on the above solution, the historical camping cell information at least indicates: last one or more cells in which the inactive user equipment camps.

Based on the above solution, the historical camping base station information at least indicates: last one or more base stations in which the inactive user equipment camps.

Based on the above solution, the second receiving module is configured to receive a radio resource control (RRC) inactive transition report comprising the historical camping information transmitted by the base station.

Based on the above solution, the RRC inactive transition report includes a state value;

a RRC inactive transition report of the historical camping information with the state value indicating that the UE is in an inactive state includes the historical camping information of the inactive UE.

Based on the above solution, the apparatus further includes:

a second transmitting module, configured to transmit a request for the RRC inactive transition report to the base station.

Based on the above solution, the request includes:

a single state reporting request;
or
a subsequent state reporting request.

Based on the above solution, the second receiving module is configured to receive the historical camping information transmitted by an anchor base station after the inactive UE performs cell reselection.

According to a sixth aspect of embodiments of the present disclosure, a communication device is provided. The communication device includes a processor, a transceiver, a memory and an executable program stored on the executable and capable of running on the processor. The processor is configured to implement the method as provided in the first or second aspect when running the executable program.

According to a seventh aspect of embodiments of the present disclosure, a computer storage medium is provided. The computer storage medium stores an executable program which, when executed by a processor, enable the method as provided in the first or second aspect to be implemented.

Embodiments of the present disclosure provide a technical solution, in which the base station transmits the historical camping information of the inactive UE to the core network device, so that the core network device will know the historical camping information of the inactive UE, which facilitates the core network device in determining suitable current paging assistance information based on the historical camping information of the inactive UE, to realize precise paging of the inactive UE and/or improving a paging success rate.

It should be understood that the above general description and the later detailed description are only illustrative and explanatory, and do not limit the present disclosure embodiments.

## BRIEF DESCRIPTION OF THE DRAWINGS

The Figures herein are incorporated into the specification and constitute a part of the specification, showing that they conform to the embodiments of the disclosure, and are used together with the specification to explain the principles of the embodiments of the disclosure.

FIG.1 is a diagram illustrating an architecture of a wireless communication system according to an embodiment of the present disclosure.

FIG.2 is a flowchart illustrating a method for processing information according to an embodiment of the present disclosure.

FIG.3 is a flowchart illustrating a method for processing information according to an embodiment of the present disclosure.

FIG.4 is a flowchart illustrating a method for processing information according to an embodiment of the present disclosure.

FIG.5 is a flowchart illustrating a method for processing information according to an embodiment of the present disclosure.

FIG.6 is a flowchart illustrating a method for processing information according to an embodiment of the present disclosure.

FIG.7 is a flowchart illustrating a method for processing information according to an embodiment of the present disclosure.

FIG.8 is a flowchart illustrating a method for processing information according to an embodiment of the present disclosure.

FIG.9 is a flowchart illustrating a method for processing information according to an embodiment of the present disclosure.

FIG. 10 is a schematic diagram illustrating a structure of an apparatus for processing information according to an embodiment of the present disclosure.

FIG. 11 is a schematic diagram illustrating a structure of an apparatus for processing information according to an embodiment of the present disclosure.

FIG. 12 is a schematic diagram illustrating a structure of a communication device according to an embodiment of the present disclosure.

## DETAILED DESCRIPTION

Embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following embodiments do not represent all implementations consistent with the present disclosure. Instead, they are merely examples of apparatuses and methods consistent with some aspects of the disclosure as described in the appended claims.

The terms in embodiments of the present disclosure are only for the purpose of describing specific embodiments, and are not intended to limit embodiments of the present disclosure. The singular forms of "a" and "the" in embodiments of the present disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second and third may be used in embodiments of the present disclosure to describe various information, the information should not be limited to these terms. These terms are only used to distinguish the same type of information from each other. For example, without departing from the scope of the present disclosure, the first information may also be referred to as the second information, and similarly, the second information may also be referred to as the first information. In different contexts, the term "if' used herein is interpreted as "when" or "upon" or "in response to determining".

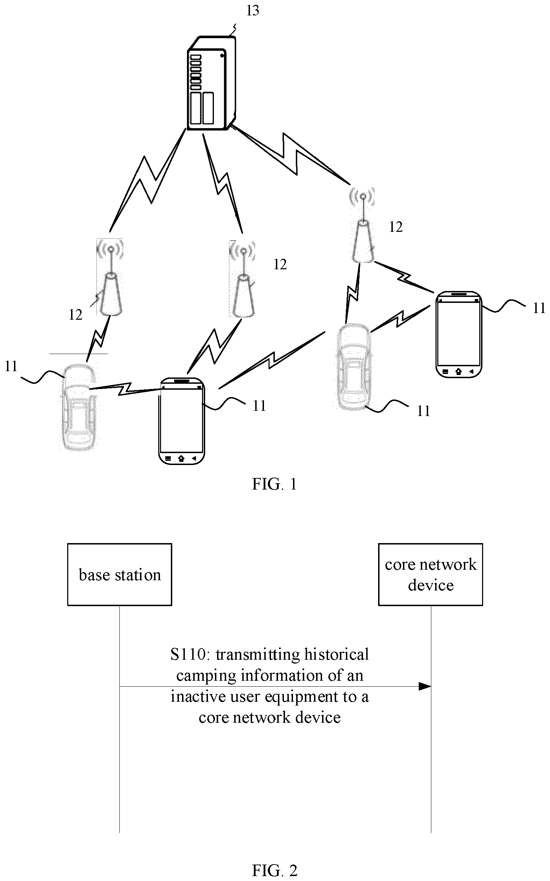

Please refer to FIG. 1, FIG. 1 illustrates a schematic diagram of an architecture of a wireless communication system provided by an embodiment of the present disclosure. As illustrates in FIG. 1, the wireless communication system is a communication system based on cellular mobile communication technology. The wireless communication system may include several user equipment (UE) 11 and several access devices 12.

The UE 11 may be a device that provides at least one of voice and data connectivity to a user. The UE 11 may communicate with one or more core networks via radio access network (RAN). The UE 11 may be an Internet of Things (IoT) UE, such as a sensor device, a cell phone (or a "cellular" phone) and a computer having the IoT UE, and for example, may be a fixed, portable, pocket-sized, handheld, computer built-in, or vehicle-mounted device, for example, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may be an unmanned aerial vehicle device. Alternatively, the UE 11 may be a vehicle-mounted device, such as, an onboard computer with a wireless communication function, or a wireless communication device externally connected to the onboard computer. Alternatively, the UE 11 may be a roadside device, e.g., may be a street lamp, a signal light, or other roadside devices, etc., with a wireless communication function.

The access device 12 may be a network-side device in the wireless communication system. The wireless communication system may be the 4th generation mobile communication (4G) system, also called as a long term evolution (LTE) system. Alternatively, the wireless communication system may also be a 5G system, also called as a new radio (NR) system or a 5G NR system. Alternatively, the wireless communication system may be a further next generation system of the 5G system. The access network in the 5G system may be referred to as NG-RAN (New Generation-Radio Access Network), or an MTC (machine type communication) system.

The access device 12 may be an evolved access device (eNB) employed in the 4G systems. Alternatively, the access device 12 may be an access device (gNB) employing a centralized distributed architecture in the 5G system. When the access device 12 adopts the centralized distributed architecture, the access device 12 generally includes a central unit (CU) and at least two distributed units (DU). The central unit is provided with protocol stacks for a packet data convergence protocol (PDCP) layer, a radio link control (RLC) protocol layer and a media access control (MAC) layer. The distributed unit is provided with protocol stacks for a physical (PHY) layer. Embodiments of the present disclosure do not limit the specific implementation of the access device 12.

A wireless connection can be established between the access device 12 and the user equipment 11 through a wireless air port. In various embodiments, the wireless air port may be a wireless air port based on the 4th generation mobile communication network technology (4G) standard. Alternatively, the wireless air port may be a wireless air port based on a 5th generation mobile communication network technology (5G) standard, for example, the wireless air port is a new radio. Alternatively, the wireless air port may be a wireless air port based on a further next-generation mobile communication network technology standard relative to 5G.

In some embodiments, an E2E (End to End) connection, for example, V2V (vehicle to vehicle) communication, V2I (vehicle to infrastructure) communication, and V2P (vehicle to pedestrian) communication and other scenarios in vehicle to everything (V2X) communication, may also be established between the UEs 11.

In some embodiments, the wireless communication system described above may also include a network management device 13.

Several access devices 12 are respectively connected to the network management device 13. The network management device 13 may be a core network device in the wireless communication system. For example, the network management device 13 may be a mobility management entity (MME) in an evolved packet core (EPC). Alternatively, the network management device may be other core network devices, such as a serving gateway (SGW), a public data network gateway (PGW), a policy and charging rules function (PCRF), or a home subscriber server (HSS), etc. Embodiments of the present disclosure do not define the implementation form of the network management device 13.

Referring to FIG. 2, an embodiment of the present disclosure provides a method for processing information according to. The method is performed by a base station, and includes following block.

At block S110, historical camping information of an inactive user equipment (UE) is transmitted to a core network device.

The base station includes, but is not limited to, an eNB or a gNB.

The core network device includes, but is not limited to, an access management function (AMF).

When the UE switches from a connected state to an inactive state or after the UE switches from the connected state to the inactive state, the UE may transmit the historical camping information of the inactive UE to the core network device.

The historical camping information may indicate information of a cell and/or a base station in which the UE has camped prior to a current time point.

The historical camping information may also indicate a historical coverage enhancement level of the UE.

For example, the historical coverage enhancement level may include, but is not limited to, an enhancement coverage level used by the UE at last one or more cells in which the UE camps.

For example, the historical coverage enhancement level may at least include a downlink enhancement coverage level and/or an uplink enhancement coverage level used by the UE when releasing a connection prior to entering into an inactive state.

In some embodiments, the historical camping information may also indicate a historical camping request of the UE, for example, a cell or a base station where the UE has been most camped, or, a cell or base station where the UE has been camped for a predetermined length of time.

In this way, the core network device, when paging the inactive UE in an unexpected situation, may accurately page an inactive user equipment desired to be paged based on the historical camping information with as little waking up of other user equipment as possible.

In some embodiments, the historical camping information includes:

> historical camping cell information;
> and/or,
> historical camping base station information.

The historical camping cell information may indicate: one or more cells in which the inactive UE has camped prior to a current time point. For example, the historical camping cell information at least indicates: a last cell in which the inactive UE camps.

For example, the historical camping cell information may include a list of cells. The list of cells includes one or more cell identifications (IDs). The cell identification may be a physical cell identification (PCI).

For another example, the historical camping information may also include a cell identification and length of camping information in the corresponding cell.

In response to the historical camping cell information including a plurality of cell IDs, the plurality of cell IDs may indicate a plurality of cells in which the UE has recently camped.

The historical camping base station information indicates one or more base stations in which the inactive UE has camped prior to a current time point.

The historical camping base station information may include a base station identification. Alternatively, the historical camping base station information may further include length of camping information.

For example, the historical camping base station information may at least include a base station identification of a last base station in which the inactive UE camps.

In response to the historical camping base station information including base station identifications of a plurality of base stations, the historical camping base station information includes the base station identifications of the plurality of base stations where a plurality of the inactive UE have recently camped.

In short, the historical camping cell information at least indicates last one or more cells in which the inactive UE camps, and/or, the historical camping base station information at least indicates: last one or more base stations in which the inactive UE camps.

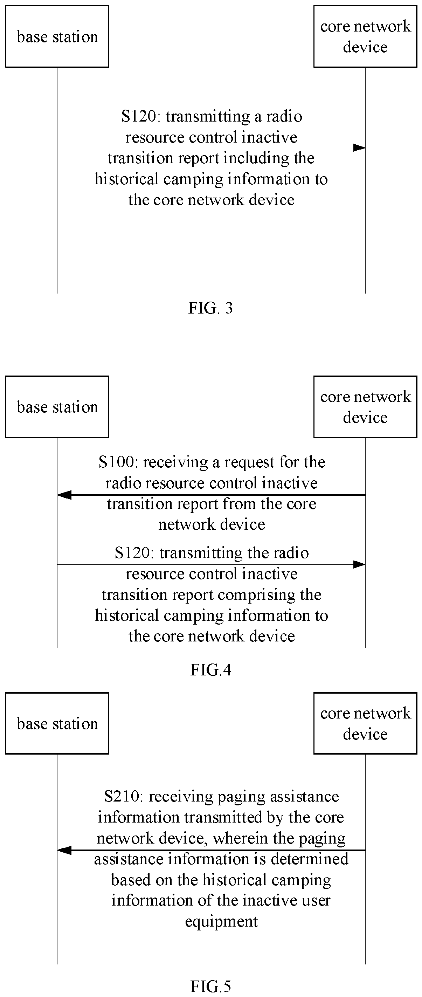

Referring to FIG. 3, an embodiment of the present disclosure provides a method for processing information. The method is performed by a base station, and includes following block.

At block S120, a radio resource control (RRC) inactive transition report including the historical camping information is transmitted to the core network device.

The historical camping information may be the historical camping information in the aforementioned embodiments, and is not described herein.

The RRC inactive transition report may be a report in which the base station informs the core network device that the UE is currently in an inactive state or has entered into an inactive state.

In an embodiment of the present disclosure, the historical camping information is carried in the RRC inactive transition report, as such, when the base station reports a notification of the UE being in the inactive state to the core network device, the historical camping information of the inactive UE is reported synchronously. Thus there is no need to report the historical camping information of the inactive UE with additional signaling.

For example, the RRC inactive transition report may include:

> a first information element (IE) indicating that the UE is in the inactive state, or that the UE switches between the inactive state and a connected state, or that the UE switches between the inactive state and an idle state; or
> a second IE indicating the historical camping information.

In another embodiment, the historical camping information is indicated using remaining bits within an IE indicating that the UE is in the inactive state and/or that the UE enters or leaves the inactive state.

In some embodiments, the RRC inactive transition report includes a state value.

The block S120 may include:

transmitting the RRC inactive transition report including the historical camping information to the core network device in response to the state value indicating that the UE is in the inactive state.

The state value may be indicated by one or more bits. In order to reduce unnecessary repetitive reporting, in some embodiments, the historical camping information is carried in the RRC inactive transition report only when the state value indicates the UE is in the inactive state.

In response to the UE exiting the inactive state, the base station transmits a RRC inactive transition report notifying the core network device that the UE exits the inactive state, such RRC inactive transition report may be used without carrying the historical camping station information, thus reducing unnecessary bit overhead between the base station and the core network device.

In some embodiments, the RRC inactive transition report may be transmitted by the base station itself to the core network device.

In other embodiments, the RRC inactive transition report may be requested by the core network device. At this point, referring to FIG. 4, the method further includes following block.

At block S100, a request for the RRC inactive transition report from the core network device is received.

For example, an access management function (AMF) transmits the request for the RRC inactive transition report to the base station. The AMF transmits the request for the RRC inactive transition report to an anchor base station of the inactive UE based on context information and/or previously reported historical camping information of the UE.

Upon receiving the request, the base station returns the RRC inactive transition report to the core network device.

When transmitting the RRC inactive transition report to the core network device, the historical camping information of the inactive UE is carried in the RRC inactive transition report.

In some embodiments, the request includes:

    a single state reporting request;
    or,
    a subsequent state reporting request.

For example, the single state reporting request may indicate the base station to send the RRC inactive transition report to the core network device once, such as to report whether a current UE enters into the inactive state or exits from the inactive state.

The subsequent state reporting request may indicate the base station to report a plurality of RRC inactive transition reports to the core network device.

After receiving the subsequent state report request, the base station, when the UE enters into or exits from the inactive state, transmits the RRC inactive transition report to the core network device. Consequently, the core network device may receive the plurality of RRC inactive transition reports reported at different time points. The core network device may timely understand a condition of the UE entering the inactive state without having to independently request the RRC inactive transition report from the base station each time.

In some embodiments, the request is the single state reporting request, the historical camping information is included in a RRC inactive transition report responsive to the single state reporting request;

or,

the request is the subsequent state reporting request, the historical camping information is included in a first RRC inactive transition report responsive to the subsequent state reporting request response.

In some embodiments, in response to the request being the single state reporting request, the historical camping information is carried in the RRC inactive transition report for the current request for reporting the report.

In response to the request being the subsequent state reporting request and no change being occurred on the cell or the base station in which the UE camps, the UE may report the RRC inactive transition report each time when the UE enters into or exits from the inactive state. In this scenario, since there is no change in the cell or the base station where the UE camps, the base station does not need to repeatedly report the historical camping information of the inactive UE. Therefore, the history camping information can be carried in the RRC inactive transition report reported for the first time only, reducing unnecessary history camping information.

In an embodiment, the block S110 may include:

transmitting the historical camping information of the inactive UE to the core network device in response to a conversion of a non-anchor base station to an anchor base station of the inactive UE.

The inactive UE may perform cell reselection, as such, one base station may change from a non-anchor base station of the inactive UE to an anchor base station of the inactive UE.

For example, the inactive UE may, after having performed the cell reselection, transmit a connection recovery request including its own UE identification to the base station in a target cell reselected. The base station may, after receiving the connection recovery request, find that the UE is a UE switched over from another cell based on the UE identification, and indicate the UE to be maintained in the inactive state in a connection recovery request response replied to the UE. In this way, the UE completes the cell reselection in the inactive state, and the base station on a network side may know that the cell reselection has occurred, and the base station of the target cell reselected by the UE is a current anchor base station of the inactive UE. The anchor base station may have previously been the non-anchor base station.

In response to one base station being switched from the non-anchor base station to the anchor base station, the base station may acquire the historical camping information of the inactive UE, and report the acquired historical camping information to the core network device.

In an embodiment, after switching from the non-anchor base station to the anchor base station of the inactive UE, the base station may transmit the historical camping information to the core network device through a path transformation request message.

For example, the historical camping information may indicate at least a cell identification of a cell in which the inactive UE currently camps and/or a base station identification of a base station in which the inactive UE currently camps.

Referring to FIG. 5, an embodiment of the present disclosure provides a method for processing information. The method includes following block.

At block S210, paging assistance information transmitted by a core network device is received. The paging assistance information may be determined based on historical camping information of an inactive user equipment (UE).

The paging assistance information may include at least one of:

> a first indication information indicating a paging range for paging the inactive UE, for example, the first indication information may indicate a cell and/or a base station for paging the inactive UE; or
> a second indication information indicating whether to page the inactive UE based on a paging early indication (PEI) after the inactive UE performs cell reselection.

For example, the paging range indicated by the first indication information may be smaller than a radio notification area (RNA) of an access network in which the current inactive UE is located, thus reducing transmission of unnecessary paging messages and reducing paging overhead.

The second indication message may indicate that the paging message is not transmitted according to the PEI after the inactive UE performs the cell reselection, thus reducing a false alarm of the PEI for other inactive UEs that are in a same paging packet as the inactive UE, and reducing a power consumption generated by alarming other inactive UEs.

In another embodiment, in a case that the inactive UE belongs to a specific paging packet, after the packet performs the cell reselection, it is indicated to transmit the PEI before transmitting a paging message for paging the inactive UE. Alternatively, in a case that the current base station is the anchor base station of the inactive UE or a previous anchor base station, the paging assistance information may be ignored, and the PEI is sent first and then the inactive UE is paged based on a PEI configuration of the inactive UE.

The PEI may be:

> a first class of PEI configured to indicate whether all UEs corresponding to one paging occasion (PO) are required to monitor the PO; and
> a second class of PEI configured to indicate whether UEs within a paging packet corresponding to one PO is required to monitor the PO.

The first class of PEI may be a common PEI, and the second class of PEI may be a PEI specific to a paging packet.

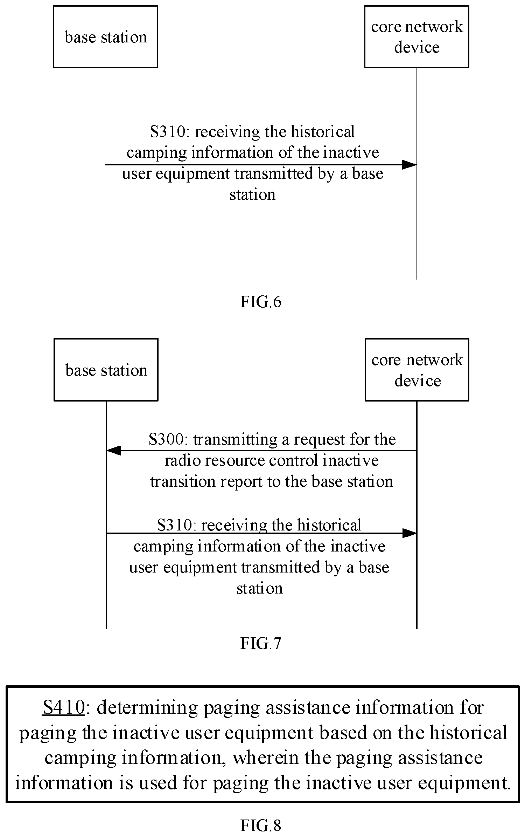

Referring to FIG. 6, an embodiment of the present disclosure provides a method for processing information. The method is performed by a core network device, and includes following block.

At block S310, historical camping information of an inactive user equipment (UE) transmitted by a base station is received.

The core network device may be any device included in a core network, and for example, the core network device can be an AMF.

In embodiments of the present disclosure, the core network device may receive the historical camping information transmitted by the inactive UE from the base station.

Therefore, when the core network device is required to page the inactive UE, the core network device may determine paging assistance information to accurately page the inactive UE, which may reduce unnecessary signaling overhead during paging the inactive UE and/or a power consumption overhead of alarming other inactive UEs.

In some embodiments, the historical camping information includes:

> historical camping cell information; and/or.
> historical camping base station information.

For example, the historical camping cell information at least indicates: the last one or more cells in which the inactive UE camps.

For example, the historical camping base station information at least indicates last one or more base stations in which the inactive UE camps.

The historical camping cell information may indicate one or more cells in which the inactive UE has camped prior to a current time point. For example, the historical camping cell information at least indicates a last cell in which the inactive UE camps.

For example, the historical camping cell information may include: a list of cells. The list of cells contains one or more cell identifications (IDs). The cell identification may be a physical cell identification (PCI).

In response to the historical camping cell information including a plurality of cell identifications (IDs), the plurality of cell IDs may indicate a plurality of cells in which the UE has recently camped.

In an embodiment, the historical camping cell information may further include historical camping length of time information of the UE in the corresponding cell.

In another embodiment, the historical camping base station information may further include historical camping length of time information of the UE at the corresponding base station.

The historical camping length of time information is indicative of both a length of time for once camping or an average length of time for a plurality of camping, etc.

The historical camping base station information is indicative of one or more base stations that the inactive UE has camped prior to the current time point.

The historical camping base station information may include a base station identification.

For example, the historical camping base station information may at least include a base station identification of a last base station in which the inactive UE camps.

In response to the historical camping base station information including base station identifications of a plurality of base stations, the historical camping base station information includes the base station identifications of the plurality of base stations where a plurality of the inactive UEs have recently camped.

In short, the historical camping cell information is at least indicates the last one or more cells in which the inactive UE camps, and/or, the historical camping base station information at least indicates last one or more base stations in which the inactive UE camps.

In an embodiment, the historical camping information may further indicate a historical coverage enhancement level of the UE.

For example, this historical coverage enhancement level may include, but is not limited to, an enhancement coverage level used by the UE at last one or more cells in which the UE camps.

For example, the historical coverage enhancement level may at least include a downlink enhancement coverage level and/or an uplink enhancement coverage level used by the UE when releasing a connection prior to entering into an inactive state.

In some embodiments, the block S310 may include:
receiving a radio resource control (RRC) inactive transition report including the historical camping information transmitted by the core network device.

In an embodiment of the present disclosure, the historical camping information is included in the RRC inactive state conversion report and reported to the core network device. Certainly, the core network device may receive the historical camping information from other message signaling, for example, receive the historical camping information from a dedicated message in the historical camping information of the inactive UE.

The historical camping information is carried in the RRC inactive transition report, thus, on one hand, there is no necessary to add an additional message signaling to transmit the historical camping information between the base station and the core network device, and on the other hand, the RRC inactive transition report is a report for the base station to notify the core network device that the UE enters into and exits from the inactive state, whereas the historical camping information of the inactive UE is used after the UE enters into the inactive state. Therefore, the RRC inactive transition report carries the history camping information, having a characteristic of strong information relevance and also reducing unnecessary reporting of the history camping information.

In some embodiments, the RRC inactive transition report includes a state value.

A RRC inactive transition report with the state value indicating that the UE is in an inactive state includes the historical camping information of the inactive UE.

The RRC inactive transition report includes one state value which may indicate that the UE enters into the inactive state or may indicate that the UE exits from the inactive state. Since the historical camping information of the inactive UE may be used when the UE is in the inactive state, in order to reduce unnecessary signaling overhead, the RRC inactive transition report carries the historical camping information only when the state value indicates that the UE is in the inactive state. That is, the RRC inactive transition report does not carry the historical camping information of the inactive UE when the state value indicates that the UE exits from the inactive state.

In some embodiments, referring to FIG. 7, the method further includes following block.

At block S300, a request for the RRC inactive transition report is transmitted to the base station.

The RRC inactive transition report is reported based on the request transmitted by the core network device. Certainly, in other embodiments, the RRC inactive transition report may be reported by the base station itself.

For example, transmitting the request for the RRC inactive transition report to the base station includes:

transmitting the request for the RRC inactive transition report to the base station in response to the core network device expecting to determine whether the UE is in the inactive state;
or,
transmitting the request for the RRC inactive transition report to the base station in response to the core network device expecting to obtain historical camping information when the UE is in the inactive state.

In some embodiments, the core network device simply obtains the historical camping station information when the UE is in the inactive state, then a flag bit may be set in the request. As such, the base station, after receiving the request, transmits to the core network device the RRC inactive transition report including the historical camping station information of the UE, regardless of whether the UE is in the inactive state or not, and in the report, an indication is given as to whether or not the UE is currently in the inactive state.

In some embodiments, the request includes:

a single state reporting request;
or,
a subsequent state reporting request.

In response to the RRC inactive transition report is for the single state reporting request, the RRC inactive transition report carries the historical camping information, or, in case of the issue being in the inactive state, the RRC inactive transition report necessarily carries the historical camping information.

In response to the RRC inactive transition report is transmitted based on the subsequent state reporting request, the RRC inactive transition report possibly carries the history-resident information of the inactive UE when the RRC inactive transition report is a first report based on the subsequent state reporting request, or, the RRC inactive transition report does not carry the historical camping information in case of the RRC inactive transition report being not the first report, thus reducing unnecessary signaling overhead.

In an embodiment, the method further comprises:
upon receiving the historical camping information of the inactive UE, saving, by the core network device, the historical camping information until receiving new historical camping information of the inactive UE, or, updating the historical camping information saved in the core network device until receiving an indication that the historical camping information is invalid from the base station or the UE.

In some embodiments, the block S310 may include:
receiving the historical camping information transmitted by an anchor base station after the inactive UE performs cell reselection.

The historical camping information may further be reported to the core network device after a base station is switched from a non-anchor base station of the inactive UE to an anchor base station.

Referring to FIG. 8, an embodiment of the present disclosure provides a method for processing information. The method includes following block.

At block S410, paging assistance information for paging the inactive UE is determined based on the historical camping information. The paging assistance information is used for paging the inactive UE.

The historical camping information may be received from a base station or determined by other manners. This embodiment may be performed independently or in combination with the method for processing information including the block S310.

For example, the paging assistance information includes:

a first indication information indicating whether to page the inactive UE based on a paging early indication (PEI) after the inactive UE performs cell reselection;
and/or,
a second indication information indicating a paging range for paging the inactive UE.

For example, the paging range, indicated in this first indication information, may be smaller than a radio notification area (RNA) of an access network in which the current inactive UE is located, thus reducing transmission of unnecessary paging messages and reducing paging overhead.

The second indication message may indicate that the paging message is not transmitted according to the PEI after the inactive UE performs the cell reselection, thus reducing a false alarm of the PEI for other inactive UEs that are in a same paging packet as the inactive UE, and reducing a power consumption generated by alarming other inactive UEs.

In another embodiment, in a case that the inactive UE belongs to a specific paging packet, after the packet performs the cell reselection, it is indicated to transmit the PEI before transmitting a paging message for paging the inactive UE. Alternatively, in a case that the current base station is the anchor base station of the inactive UE or a previous anchor base station, the paging assistance information may be ignored, and the PEI is sent first and then the inactive UE is paged based on a PEI configuration of the inactive UE.

The paging packet of the UE may be determined using the following functional relationship:
A packet identification (ID) of the paging packet of the UE is obtained in accordance with a UE-ID mode-taking method, which is given by a following formula:

$$wg = floor\left(floor\left(\frac{UE\_ID}{N \times N_s}\right)/N_n\right) \ mod \ N_w$$

where $N_w$ is a total number of paging packet resources, and
wg is an index of a selected paging packet resource.

The UE-ID mode-taking method is a random selection method or a randomization method. All the paging packet resources are modeled according to the UE-ID.

N is a paging frame density in a time domain, and $N_s$

is a paging density within one paging frame in the time domain;

$N_n$ is a paging narrow band;

$N_w$ is a total number of paging packet resources.

*UE ID* = TIMSI mod M;

where the TIMSI is a temporary mobile subscriber identification number of the UE; the M is a constant for taking a mode. For example, the M takes a value of 1024, etc. In some embodiments, the paging assistance information may further include:

a third indication information indicating an enhancement coverage level of the inactive UE.

Upon receiving the third indication information, the base station may determine the enhancement coverage level utilized for paging the inactive UE based on the enhancement coverage level, and/or, may determine paging subframes and/or paging carriers, etc., for paging the inactive UE based on enhancement coverage levels configured for respective paging subframes and paging carriers, thus reducing unnecessary paging on other subframes and/or carriers.

A method for processing information is provided in an embodiment of the present disclosure. The method is performed by a base station, and includes a following block.

At block S510, paging assistance information is transmitted to the base station. The paging assistance information is configured to assist the base station in accurately paging the inactive UE.

For example, the paging assistance information may be determined based on historical camping information of the UE. The paging assistance information may include the aforementioned first indication information and/or the second indication information and/or the third indication information.

For example, when the core network device has lost context of the UE and is required to page the inactive UE, the core network device transmits a paging signaling to the base station. The paging signaling may include the paging assistance information.

Simultaneously, the paging signaling is also configured to indicate the base station to broadcast the paging message for paging the inactive UE. For example, the base station pages the inactive UE based on the paging assistance information to reduce transmission of unnecessary paging messages, and save signaling overhead, and/or determining, based on the paging assistance information whether to first send the PEI before paging the UE according to PEI configuration of the inactive UE or to directly transmit the paging message on a PO listened by the UE based on a paging configuration of the UE, to reduce fault alarm of an inactive UE in the same paging packet as the UE.

After receiving the third indication information, the base station may determine, based on the enhancement coverage level, paging parameters such as the enhancement coverage level, the paging subframes and/or the paging carriers for paging the inactive UE, thus reducing unnecessary paging on other subframes and/or carriers and increasing a success rate of paging of the inactive UE.

The historical camping information added between the base station and the core network may be used to determination of carrying the paging assistance information of the core network for the inactive UE. The paging assistance information may be used for paging the inactive UE.

The historical camping information includes one of:

historical cell information where the UE camps; and
historical base station information where the UE camps; and
historical cell information where the UE has last camped; and
historical base station information where the UE has last camped.

As an embodiment, information content interacted between the base station and the core network may further include a coverage enhancement level.

Correspondingly, the paging assistance information may further include indicating a coverage enhancement level of the inactive UE.

The history camping information is carried in the RRC inactive transition report transmitted to the core network.

The history camping information is optionally carried in a RRC inactive transition report message transmitted to the core network.

The historical camping information needs to be carried only when a value of a state value (RRC State) in the RRC inactive transition report indicates that the UE is in the inactive state.

The historical camping information needs to be carried only when a value of a state value (RRC State) in the RRC inactive transition report indicates that the UE is in the inactive state and following cases are fulfilled.

Case 1:

The base station receives a RRC inactive transition report request, a type of which is single state reporting "single RRC connected state report".

Case 2:

The base station receives a RRC inactive transition report request, a type of which is subsequent state reporting "subsequent state transition report". Then, the base station needs to report the historical camping base station information only once.

For example, when the core network device is informed for the first time that the UE is currently in the inactive state, the historical camping information is carried in the RRC inactive transition report.

The historical camping information may be carried in a path transformation request message transmitted to the core network.

As an embodiment, the non-anchor base station may notify the core network of the historical camping information after converted to a new anchor base station.

For example, a protocol agrees that the path transformation request message or the RRC inactive transition report carries the historical camping information of the UE. The historical camping information at least indicates the cell and/or the base station where the UE currently camps.

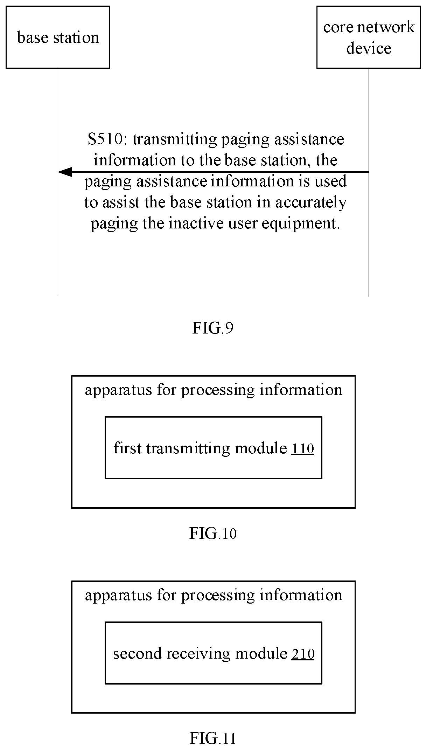

Referring to FIG. 10, an apparatus for processing information is provided in an embodiment of the present disclosure. The apparatus includes:

a first transmitting module 110, configured to transmit historical camping information of an inactive user equipment (UE) to a core network device.

In some embodiments, the first transmitting module 110 may be a program module. The program module implements transmitting of the historical camping information of the inactive UE after executed by a processor.

In some embodiments, the first transmitting module 110 may be a hardware and software module. The hardware and software module includes, but is not limited to, a variety of programmable arrays. The programmable array includes, but is not limited to, a field programmable array and/or a complex programmable array.

In other embodiments, this first transmitting module 110 may be a hardware-only module. The hardware-only module includes, but is not limited to, a variety of specialized integrated circuits.

In some embodiments, the historical camping information includes:

historical camping cell information;
and/or,
historical camping base station information.

In some embodiments, the historical camping cell information at least indicates last one or more cells in which the inactive UE camps.

In some embodiments, the historical camping base station information at least indicates: last one or more base stations in which the inactive UE camps.

In some embodiments, the first transmitting module 110 is configured to transmit a radio resource control (RRC) inactive transition report including the historical camping information to the core network device.

In some embodiments, the RRC inactive transition report comprises: a state value;
the first transmitting module 110 is configured to transmit the radio resource control inactive transition report comprising the historical camping information to the core network device in response to the state value indicating that the UE is in an inactive state.

In some embodiments, the apparatus further includes:

a first receiving module, configured to receive a request for the RRC inactive transition report from the core network device.

In some embodiments, the request includes:

a single state reporting request;
or,
a subsequent state reporting request.

In some embodiments, the request is the single state reporting request, the historical camping information is comprised in a RRC inactive transition report responsive to the single state reporting request;
or,
the request is the subsequent state reporting request, the historical camping information is comprised in a first RRC inactive transition report responsive to the subsequent state reporting request.

In some embodiments, the transmitting module is configured to transmit the historical camping information of the inactive UE to the core network device in response to a conversion of a non-anchor base station to an anchor base station of the inactive UE.

Referring to FIG. 11, an apparatus for processing information is provided in an embodiment of the present disclosure. The apparatus includes:
a second receiving module 210, configured to historical camping information of an inactive user equipment (UE) transmitted by a base station.

In some embodiments, the second receiving module 210 may be a program module. The program module implements reception of the historical camping information of the inactive UE after executed by a processor.

In some embodiments, the second receiver module 210 may be a hardware and software module. The hardware and software module includes, but is not limited to, a variety of programmable arrays. The programmable array includes, but is not limited to, a field programmable array and/or a complex programmable array.

In still other embodiments, the second receiver module 210 may be a hardware-only module. The hardware-only module includes, but is not limited to, a variety of specialized integrated circuits.

In some embodiments, the historical camping information includes:

historical camping cell information;
and/or,
historical camping base station information.

In some embodiments, the historical camping cell information at least indicates: last one or more cells in which the inactive user equipment camps.

In some embodiments, the historical camping base station information at least indicates: last one or more base stations in which the inactive user equipment camps.

In some embodiments, the second receiving module 210 is configured to receive a radio resource control (RRC) inactive transition report comprising the historical camping information transmitted by the base station.

In some embodiments, the RRC inactive transition report includes a state value;
a RRC inactive transition report of the historical camping information with the state value indicating that the UE is in an inactive state includes the historical camping information of the inactive UE.

In some embodiments, the apparatus further includes:
a second transmitting module, configured to transmit a request for the RRC inactive transition report to the base station.

In some embodiments, the request includes:

> a single state reporting request;
> or,
> a subsequent state reporting request.

In some embodiments, the second receiving module 210 is configured to receive the historical camping information transmitted by an anchor base station after the inactive UE performs cell reselection.

In some embodiments, the apparatus further includes:
a determining module configured to determine paging assistance information for paging the inactive UE based on the historical camping information. The paging assistance information is configured to page the inactive UE.

In some embodiments, the paging assistance information includes:

> the first indication information indicating whether to page the inactive UE based on a paging early indication (PEI) after the inactive UE performs cell reselection;
> and/or,
> the second indication information indicating a paging range for paging the inactive UE.

An embodiment of the present disclosure provides a communication device including:

> a memory for storing processor executable instructions; and
> a processor, connected to the memory;
> in which, the processor is configured to execute the method for processing information performed by a base station or a core network device provided by any of the foregoing technical solutions.

The processor may include various types of storage media which are non-transitory computer storage media capable of continuing to memorize information stored thereon after the communication device is powered down.

Herein, the communication device includes the base station or the core network device.

The processor may be connected to the memory via a bus or the like for reading an executable program stored on the memory, for example, at least one of the methods as shown in FIGs. 2 to 9.

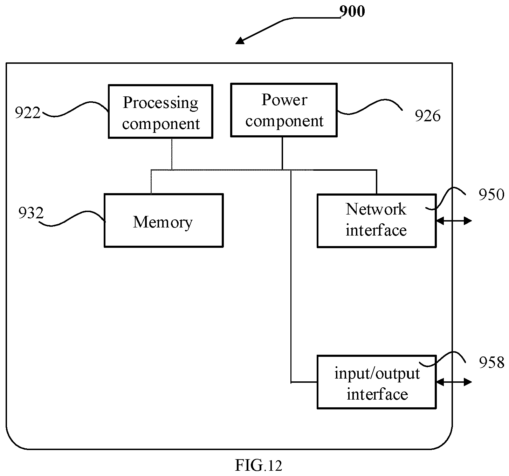

Referring to FIG. 12, an architecture of an access device is provided in an embodiment of the present disclosure. For example, the communication device 900 may be provided as a network side device. The communication device can be an access device and/or a core network device as previously described.

Referring to FIG. 12, the communication device 900 includes a processing component 922, which further includes one or more processors, and memory resources represented by a memory 932 for storing instructions, such as an application program, that can be executed by the processing component 922. The application program stored in memory 932 can include one or more modules each corresponding to a set of instructions. Alternatively, the processing component 922 is configured to execute instructions to perform any of the methods described in the foregoing method applied to the access device, as the methods shown in FIGs. 2 to 9.

The communication device 900 can further comprises a power component 926 configured to perform power management of the base station 900, a wired or wireless network interface 950 configured to connect the base station 900 to a network, and an input/output (I/O) interface 958. The base station 900 can operate an operating system based on the operating system stored in the memory 932, such as Windows Server TM, Mac OS XTM, UnixTM, LinuxTM, FreeBSDTM, etc.

Other implementations of the embodiments of the disclosure will be readily apparent to those skilled in the art from consideration of the specification and practice of the disclosure disclosed herein. This application is intended to cover any modification, use or adaptation of embodiments of the present disclosure, these modifications, uses or adaptations follow the general principles of embodiments of the present disclosure and include those in the technical field not disclosed by the embodiments of the present disclosure Common knowledge or common technical means. The specification and examples are to be considered exemplary only, with a true scope and spirit of the embodiments of the disclosure being indicated by the following claims.

It should be understood that embodiments of the present disclosure are not limited to the precise structures described above and shown in the drawings, and various modifications and changes can be made without departing from the scope thereof. The scope of embodiments of the present disclosure is limited only by the appended claims.

**Claims**

1. A method for processing information, performed by a base station, comprising:
transmitting historical camping information of an inactive user equipment (UE) to a core network device.

2. The method according to claim 1, wherein the historical camping information comprises:

historical camping cell information;
and/or,
historical camping base station information.

3. The method according to claim 2, wherein the historical camping cell information at least indicates last one or more cells in which the inactive user equipment camps.

4. The method according to claim 2, wherein the historical camping base station information at least indicates last one or more base stations in which the inactive user equipment camps.

5. The method according to any one of claims 1 to 4, wherein transmitting the historical camping information of the inactive UE to the core network device comprises:
transmitting a radio resource control (RRC) inactive transition report comprising the historical camping information to the core network device.

6. The method according to claim 5, wherein the RRC inactive transition report comprises a state value;
transmitting the RRC inactive transition report comprising the historical camping information to the core network device comprising:
transmitting the RRC inactive transition report comprising the historical camping information to the core network device in response to the state value indicating that the UE is in an inactive state.

7. The method according to claim 5, comprising:
receiving a request for the RRC inactive transition report from the core network device.

8. The method according to claim 7, wherein the request comprises:

a single state reporting request;
or,
a subsequent state reporting request.

9. The method according to claim 8, wherein the request is the single state reporting request, the historical camping information is comprised in a RRC inactive transition report responsive to the single state reporting request;
or,
the request is the subsequent state reporting request, the historical camping information is comprised in a first RRC inactive transition report responsive to the subsequent state reporting request.

10. The method according to any one of claims 1 to 4, wherein transmitting the historical camping information of the inactive UE to the core network device comprises:
transmitting the historical camping information of the inactive UE to the core network device in response to a conversion of a non-anchor base station to an anchor base station of the inactive UE.

11. A method for processing information, performed by a core network device, comprising:
receiving historical camping information of an inactive user equipment (UE) transmitted by a base station.

12. The method according to claim 11, wherein the historical camping information comprises:

historical camping cell information;
and/or,
historical camping base station information.

13. The method according to claim 12, wherein the historical camping cell information at least indicates last one or more cells in which the inactive user equipment camps.

14. The method according to claim 12, wherein the historical camping base station information at least indicates last one or more base stations in which the inactive user equipment camps.

15. The method according to any one of claims 11 to 14, wherein receiving the historical camping information of the inactive UE transmitted by the base station comprises:
receiving a radio resource control (RRC) inactive transition report comprising the historical camping information transmitted by the base station.

16. The method according to claim 15, wherein the RRC inactive transition report comprises a state value;
a RRC inactive transition report of the historical camping information with the state value indicating that the UE is in an inactive state comprises the historical camping information of the inactive UE.

17. The method according to claim 15, comprising:
transmitting a request for the RRC inactive transition report to the base station.

18. The method according to claim 17, wherein the request comprises:

   a single state reporting request;
   or
   a subsequent state reporting request.

19. The method according to any one of claims 11 to 14, wherein receiving the historical camping information of the inactive UE transmitted by the base station comprises:
   receiving the historical camping information transmitted by an anchor base station after the inactive UE performs cell reselection.

20. An apparatus for processing information, comprising:
   a first transmitting module, configured to transmit historical camping information of an inactive user equipment (UE) to a core network device.

21. The apparatus according to claim 20, wherein the historical camping information comprises:

   historical camping cell information;
   and/or,
   historical camping base station information.

22. The apparatus according to claim 21, wherein the historical camping cell information at least indicates last one or more cells in which the inactive UE camps.

23. The apparatus according to claim 21, wherein the historical camping base station information at least indicates: last one or more base stations in which the inactive UE camps.

24. The apparatus according to any one of claims 20 to 23, wherein the first transmitting module is configured to transmit a radio resource control (RRC) inactive transition report comprising the historical camping information to the core network device.

25. The apparatus according to claim 24, wherein the RRC inactive transition report comprises: a state value;
   the first transmitting module is configured to transmit the radio resource control inactive transition report comprising the historical camping information to the core network device in response to the state value indicating that the UE is in an inactive state.

26. The apparatus according to claim 24, comprising:
   a first receiving module, configured to receive a request for the RRC inactive transition report from the core network device.

27. The apparatus according to claim 26, wherein the request comprises:

   a single state reporting request;
   or,
   a subsequent state reporting request.

28. The method according to claim 27, wherein the request is the single state reporting request, the historical camping information is comprised in a RRC inactive transition report responsive to the single state reporting request;
   or,
   the request is the subsequent state reporting request, the historical camping information is comprised in a first RRC inactive transition report responsive to the subsequent state reporting request.

29. The device according to any one of claims 20 to 23, wherein the transmitting module is configured to transmit the historical camping information of the inactive UE to the core network device in response to a conversion of a non-anchor base station to an anchor base station of the inactive UE.

30. An information processing apparatus, comprising:
   a second receiving module, configured to receive historical camping information of an inactive user equipment (UE) transmitted by a base station.

31. The apparatus according to claim 30, wherein the historical camping information comprises:

   historical camping cell information;
   and/or,
   historical camping base station information.

32. , The apparatus according to claim 31, wherein the historical camping cell information at least indicates: last one or more cells in which the inactive user equipment camps.

33. The apparatus according to claim 31, wherein the historical camping base station information at least indicates: last one or more base stations in which the inactive user equipment camps.

34. The apparatus according to any one of claims 30 to 33, wherein the second receiving module is configured to receive a radio resource control (RRC) inactive transition report comprising the historical camping information transmitted by the base station.

35. The apparatus according to claim 34, wherein the RRC inactive transition report comprises a state value;

a RRC inactive transition report of the historical camping information with the state value indicating that the UE is in an inactive state comprises the historical camping information of the inactive UE.

36. The apparatus according to claim 34, comprising: a second transmitting module, configured to transmit a request for the RRC inactive transition report to the base station.

37. The apparatus according to claim 36, wherein the request comprises:

> a single state reporting request;
> or,
> a subsequent state reporting request.

38. The apparatus according to any one of claims 30 to 37, wherein the second receiving module is configured to receive the historical camping information transmitted by an anchor base station after the inactive UE performs cell reselection.

39. A communication device comprising a processor, a transceiver, a memory, and an executable program stored on the executable and capable of running on the processor, wherein the processor is configured to implement the method of any one of claims 1 to 10 or the method of any one of claims 11 to 19 when running the executable program.

40. A computer storage medium, storing an executable program which, when executed by a processor, enables the method of any one of claims 1 to 10 or the method of any one of claims 11 to 19 to be implemented.

13

FIG. 1

S110: transmitting historical camping information of an inactive user equipment to a core network device

FIG. 2

base station

core network device

S120: transmitting a radio resource control inactive transition report including the historical camping information to the core network device

FIG. 3

base station

core network device

S100: receiving a request for the radio resource control inactive transition report from the core network device

S120: transmitting the radio resource control inactive transition report comprising the historical camping information to the core network device

FIG.4

base station

core network device

S210: receiving paging assistance information transmitted by the core network device, wherein the paging assistance information is determined based on the historical camping information of the inactive user equipment

FIG.5

base station

core network
device

S310: receiving the historical
camping information of the inactive
user equipment transmitted by a base
station

FIG.6

base station

core network
device

S300: transmitting a request for the
radio resource control inactive
transition report to the base station

S310: receiving the historical
camping information of the inactive
user equipment transmitted by a base
station

FIG.7

S410: determining paging assistance information for paging the inactive user equipment based on the historical camping information, wherein the paging assistance information is used for paging the inactive user equipment.

FIG.8

base station

core network device

S510: transmitting paging assistance information to the base station, the paging assistance information is used to assist the base station in accurately paging the inactive user equipment.

FIG.9

apparatus for processing information

first transmitting module 110

FIG.10

apparatus for processing information

second receiving module 210

FIG.11

**900**

922  Processing component

926  Power component

932  Memory

950  Network interface

958  input/output interface

FIG.12

## INTERNATIONAL SEARCH REPORT

| International application No. |
| --- |
| **PCT/CN2021/141349** |

| A. | CLASSIFICATION OF SUBJECT MATTER |
| --- | --- |

H04W 68/02(2009.01)i

According to International Patent Classification (IPC) or to both national classification and IPC

| B. | FIELDS SEARCHED |
| --- | --- |

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; 3GPP: 寻呼, 小区, 基站, 核心网, 位置, 历史, 经过, 最后, 驻留, 激活, 空闲, Paging, cell, gNB, eNB, AMF, MME, CN, location, position, history, last, Resident, activ+, idle

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106304336 A (BEIJING SAMSUNG TELECOM R&D CENTER et al.) 04 January 2017 (2017-01-04) <br> description, paragraphs 90-109 | 1-40 |
| A | CN 102835162 A (HUAWEI TECHNOLOGIES CO., LTD.) 19 December 2012 (2012-12-19) <br> entire document | 1-40 |
| A | US 10070412 B1 (AT&TIPILP) 04 September 2018 (2018-09-04) <br> entire document | 1-40 |
| A | CN 107295578 A (ZTE CORP.) 24 October 2017 (2017-10-24) <br> entire document | 1-40 |
| A | CN 113784286 A (ALIBABA DAMO ACADEMY (HANGZHOU) TECHNOLOGY CO., LTD.) 10 December 2021 (2021-12-10) <br> entire document | 1-40 |
| A | CN 111328462 A (BEIJING XIAOMI MOBILE SOFTWARE CO., LTD.) 23 June 2020 (2020-06-23) <br> entire document | 1-40 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 May 2022** | **08 June 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2021/141349** |

| Patent document cited in search report | | | Publication date (day/month/year) | Patent family member(s) | | | Publication date (day/month/year) |
| --- | --- | --- | --- | --- | --- | --- | --- |
| CN | 106304336 | A | 04 January 2017 | WO | 2016186416 | A1 | 24 November 2016 |
|  |  |  |  | CN | 113596990 | A | 02 November 2021 |
| CN | 102835162 | A | 19 December 2012 | US | 2015080034 | A1 | 19 March 2015 |
|  |  |  |  | WO | 2012126437 | A2 | 27 September 2012 |
|  |  |  |  | EP | 2858434 | A2 | 08 April 2015 |
|  |  |  |  | WO | 2012126437 | A3 | 02 May 2013 |
|  |  |  |  | EP | 2858434 | A4 | 19 August 2015 |
| US | 10070412 | B1 | 04 September 2018 | US | 2019021070 | A1 | 17 January 2019 |
| CN | 107295578 | A | 24 October 2017 | US | 2019021129 | A1 | 17 January 2019 |
|  |  |  |  | EP | 3422768 | A1 | 02 January 2019 |
|  |  |  |  | WO | 2017166970 | A1 | 05 October 2017 |
|  |  |  |  | US | 2021195473 | A1 | 24 June 2021 |
|  |  |  |  | EP | 3422768 | A4 | 03 April 2019 |
|  |  |  |  | US | 10869352 | B2 | 15 December 2020 |
|  |  |  |  | CN | 107295578 | B | 21 January 2020 |
| CN | 113784286 | A | 10 December 2021 | None | | | |
| CN | 111328462 | A | 23 June 2020 | WO | 2021159256 | A1 | 19 August 2021 |

Form PCT/ISA/210 (patent family annex) (January 2015)